# EUROPEAN PATENT APPLICATION

(11) **EP 1 701 334 A2**
(43) Date of publication of application: **13.09.2006**
(21) Application number: 05254192.7
(22) Date of filing: 04.07.2005
(51) Int. Cl.: G09G 5/397

(54) **Method of displaying overlapping windows on a display device and display controller therefor**

(30) Priority: 08.03.2005 JP 2005063615
(71) Applicant: FUJITSU LIMITED, Kawasaki-shi, Kanagawa 211-8588 (JP)
(72) Inventor: Kuroki, Kenichiro c/o Fujitsu Limited, Kawasaki-shi Kanagawa 211-8588 (JP)
(74) Representative: Fenlon, Christine Lesley

(57) **Abstract**

In order to solve a problem that when displaying a plurality of overlapping windows, the occupied ratio of a common data bus increases, there is no way but to improve the operating speed of the data bus in order to display data as much as possible and as a result, power consumption increases. In a display controller embodying the present invention, only data actually displayed visibly on a screen is read by slicing the screen at the vertex coordinates (X,Y) of overlapping windows and setting a starting address in VRAM(11) and a step width for each sliced rectangular area, instead of reading the display data in all windows from the VRAM(11).

## Description

### Background of the Invention

### Field of the Invention

The present invention relates to a display controller enabling display of a plurality of overlapped windows, and more particularly relates to an LSI comprising a synchronous (RGB interface type) display control block, memory (VRAM) storing window data displayed on a display and a common data bus for transferring data from the VRAM to the display control block.

### Description of the Related Art

Fig. 1 shows an example of the overlapped display image and an example of the display data storage. In Fig. 1, a layer A window, a layer B window and a layer C window are overlapped on a display, and the display data in each layer is stored in the VRAM.
Fig. 2A shows an example of the configuration of a previously-proposed display controller for displaying a plurality of overlapped layers shown in Fig. 1. Fig. 2B explains its operation.

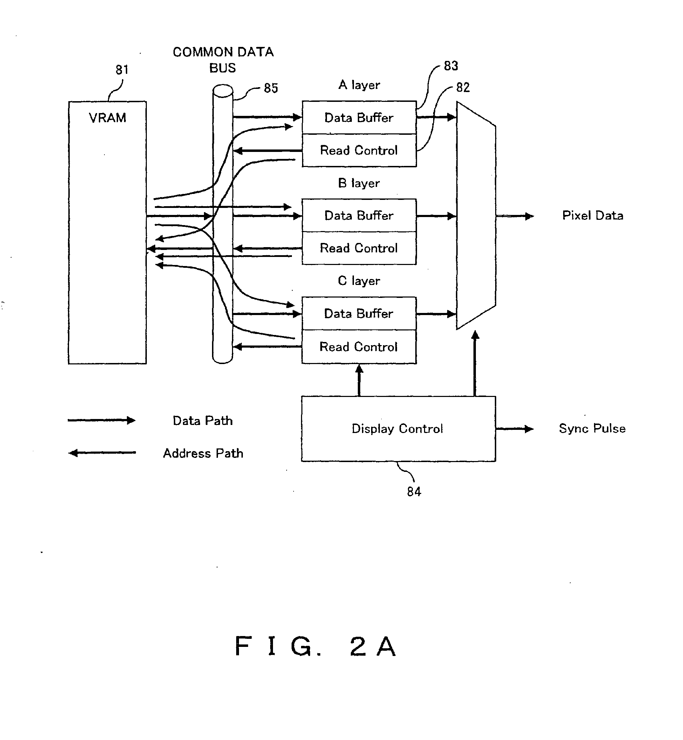

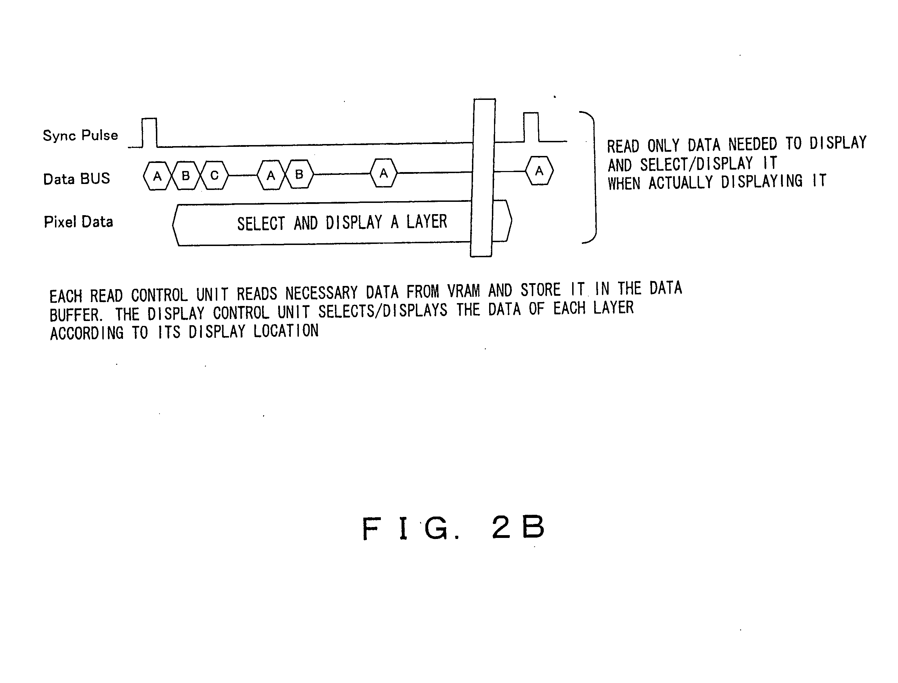

The configuration shown in Fig. 2A comprises a read control 82 for reading data from a VRAM 81 for each layer and a data buffer 83 for storing the read data. As shown in Fig. 2B, each read control 82 autonomously reads necessary data from the VRAM 81 for each frame and stores the data in the data buffer 83. A display control 84 outputs a synchronous pulse (sync pulse). Simultaneously, the display control 84 selects data to be outputted to outputting coordinates from the data buffer 83 of each layer, according to the display position of each layer, provided from the outside of the display controller (origin coordinates and X/Y sizes) and the display priority of each layer, and outputs it as pixel data.

As described above, since in order to display a plurality of pieces of data, the display data of all windows are read and stored in the data buffer 83 once and is displayed according to its priority, the occupied ratio of the common data bus 85 (bus bandwidth) increases. In order to display data as much as possible, there is no way but to improve the operating speed of the common data bus 85, thereby increasing power consumption, which is a problem.

Next, prior technical references disclosing a technology for displaying a plurality of windows on a display, related to an embodiment of the present invention are introduced.

Patent reference 1 discloses that when rewriting part of display on a CRT screen, the efficiency in use of a VRAM area is improved, the consumption of a CPU time is reduced and memory consumption is reduced. Although the technology can switch screen display, it cannot display a plurality of overlapped windows.

Patent reference 2 discloses the display control in the case where a plurality of overlapped windows is displayed on a raster display. In the display control disclosed by the Patent reference 2, image data is directly transmitted to a frame buffer to a display by switching the address of a frame buffer storing the image data, based on a preset horizontal line screen dividing data.

Patent reference 3 disclosed that in a video display for piling and displaying video images as in TV or the like on a display screen of a personal computer or the like, a portion overlapped and hidden is prevented from being written into video RAM.

Although each of the above-mentioned Patent references 1 through 3 discloses a variety of technologies for displaying a plurality of windows on a display, none of them discloses the above-mentioned problem of an LSI comprising a synchronous (RGB interface type) display control block, memory (VRAM) storing window data displayed on a display and a common data bus for transferring data from the VRAM to the display control block.

Patent reference 1: Japanese Published Patent Application No. H6-75741

Patent reference 2: Japanese Published Patent Application No. H2-33622

Patent reference 3: Japanese Published Patent Application No. H6-124189

### Summary of the Invention

Accordingly, it is desirable that when displaying a plurality of overlapped layers, the occupied ratio of a common data bus (bus bandwidth) increase. Moreover, in order to display data as much as possible, there is no way but to improve the operating speed of a data bus, thereby increasing power consumption.

According to an embodiment of the present invention, by setting in such a way as to slice a screen by the coordinates (X, Y) of the vertex of overlapped windows and setting a leading address and a step width on the VRAM for a sliced rectangular area, only visible data actually displayed on the screen can be read instead of reading all the display data of each window from the VRAM.

Thus, according to an embodiment of the present invention, the occupied ratio of the common data bus can be reduced and the ratio in use of the common data bus can be reduced. Accordingly, the installed speed of the bus can be reduced, thereby reducing power consumption.

### Brief Description of the Drawings

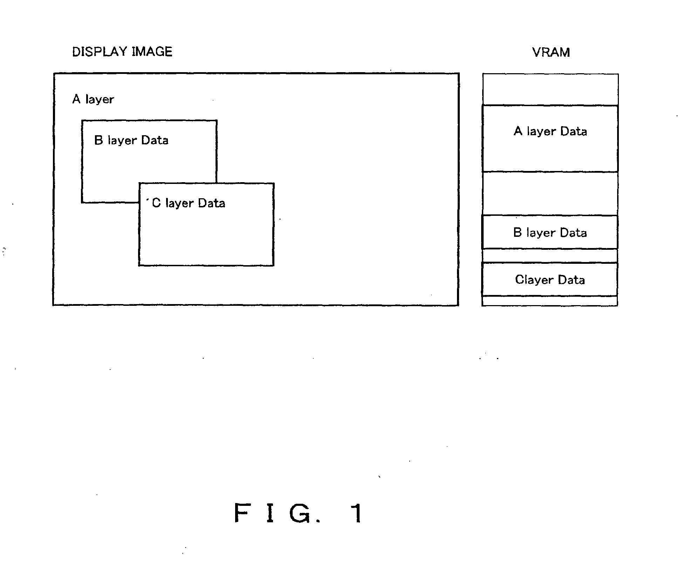

Fig. 1 shows an example of the overlapped display image and an example of the display data storage.
Fig. 2A shows an example of the configuration of a previously-proposed display controller for displaying a plurality of overlapped layers.
Fig. 2B explains an example of the operation of the previously-proposed display controller for displaying a plurality of overlapped layers.

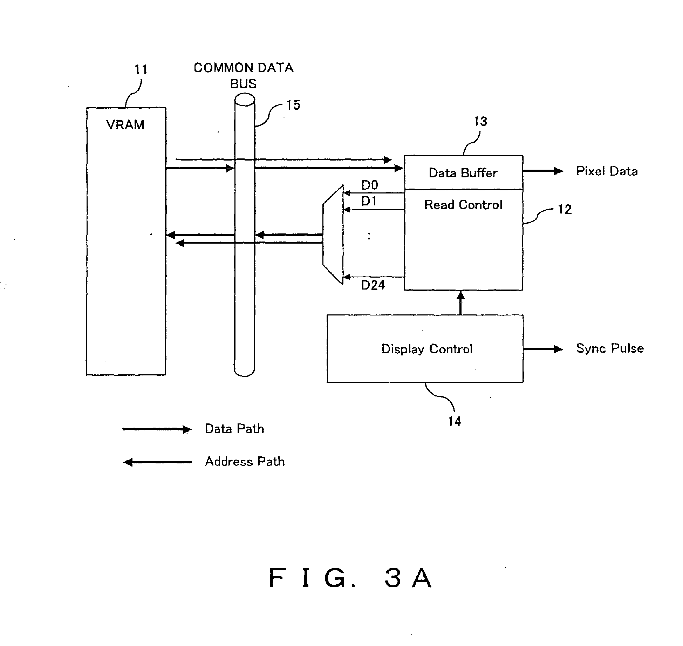

Fig. 3A shows an example of the configuration of a display controller embodying the present invention.

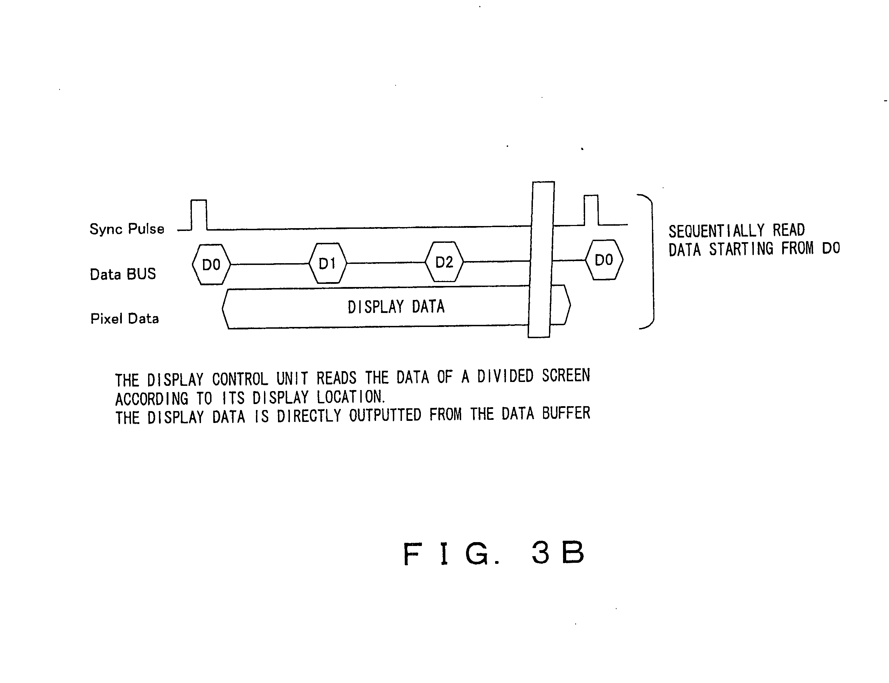

Fig. 3B shows an example of the operation of the display controller embodying the present invention.

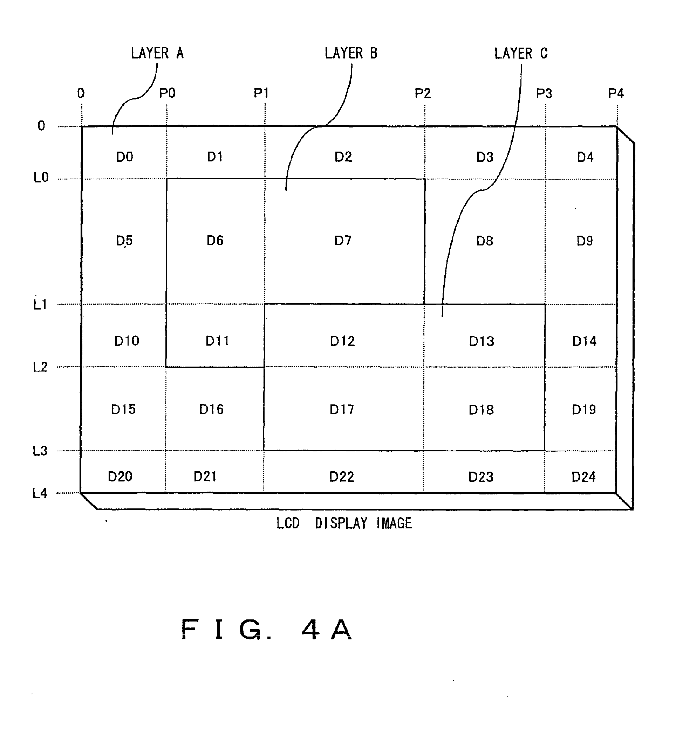

Fig. 4A shows an example of the liquid crystal display (LCD)'s display image.

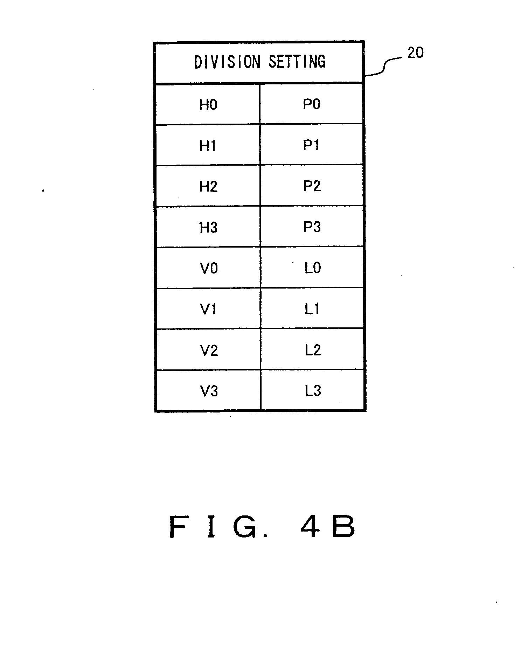

Fig. 4B shows a screen division setting corresponding to the display image example.

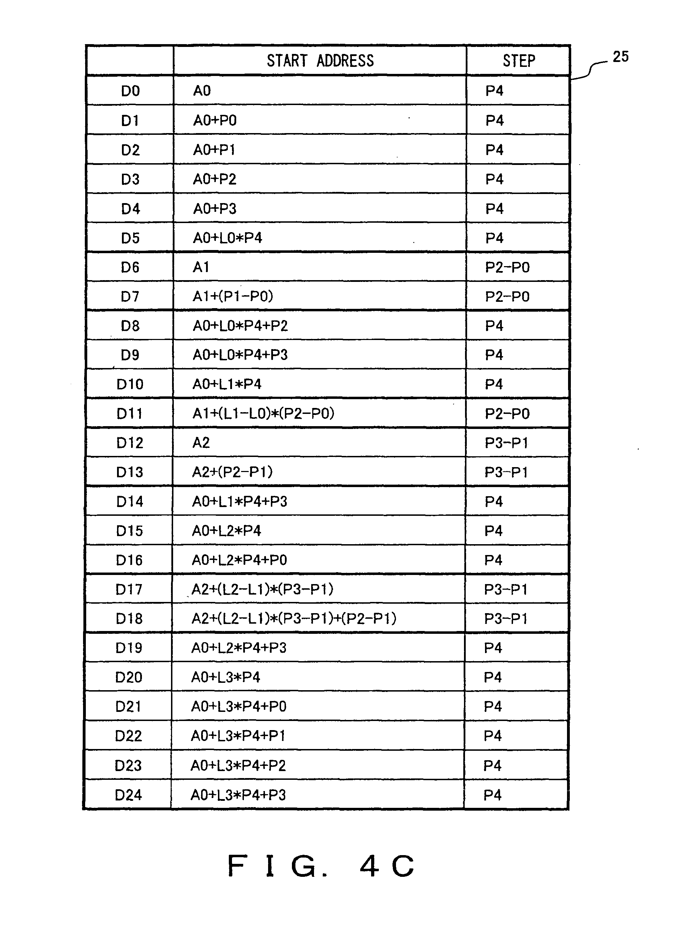

Fig. 4C explains the starting address and step width for each rectangular area.

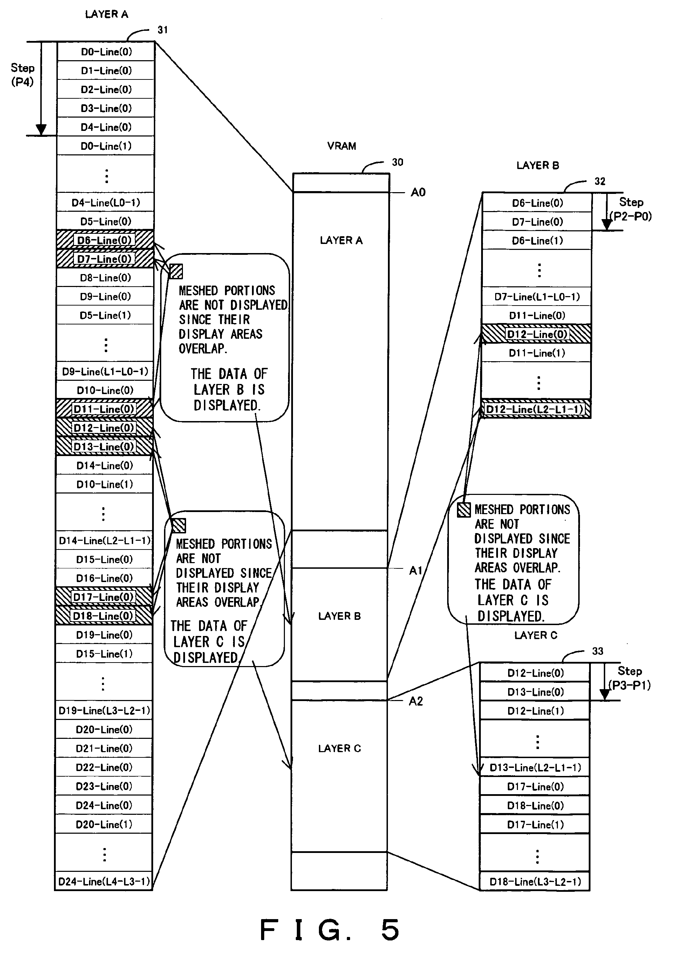

Fig. 5 explains the correspondence between the display data of each layer stored in the VRAM and the rectangular area.

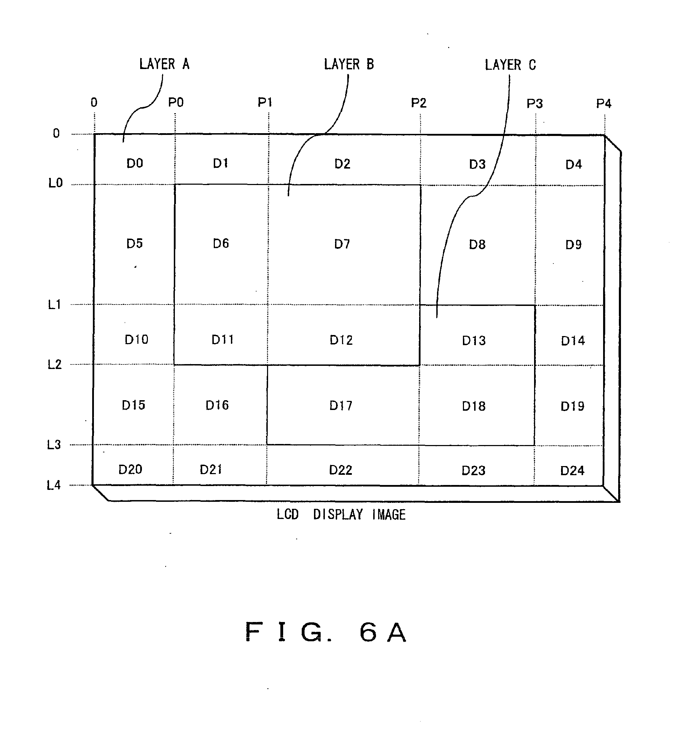

Fig. 6A shows an example of the LCD display image in the case where the over or under positional relationship between display layers is modified.

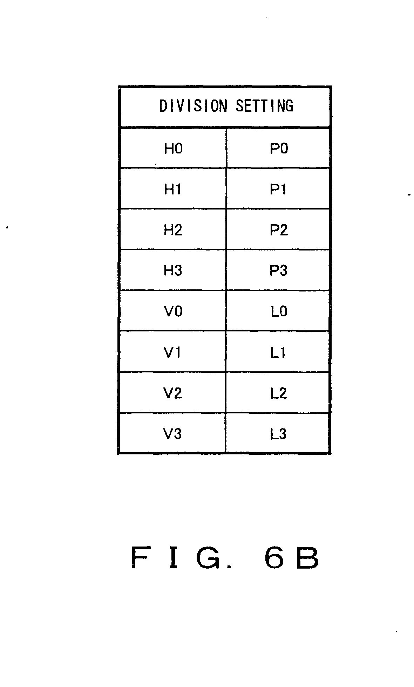

Fig. 6B shows the screen dividing setting corresponding to the LCD display image example in the case where the over or under positional relationship between display layers is modified.

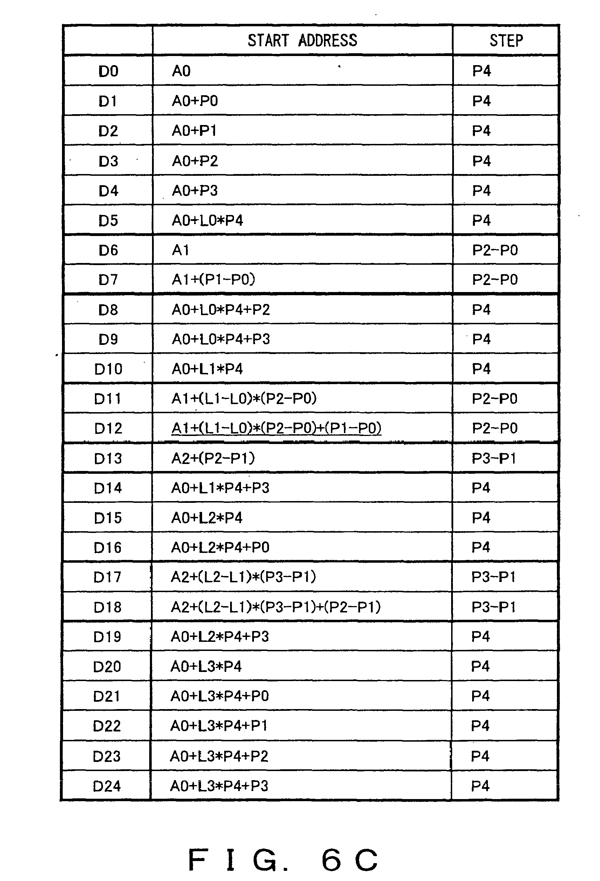

Fig. 6C explains the starting address and step width for each rectangular area in the case where the over or under positional relationship between display layers is modified.

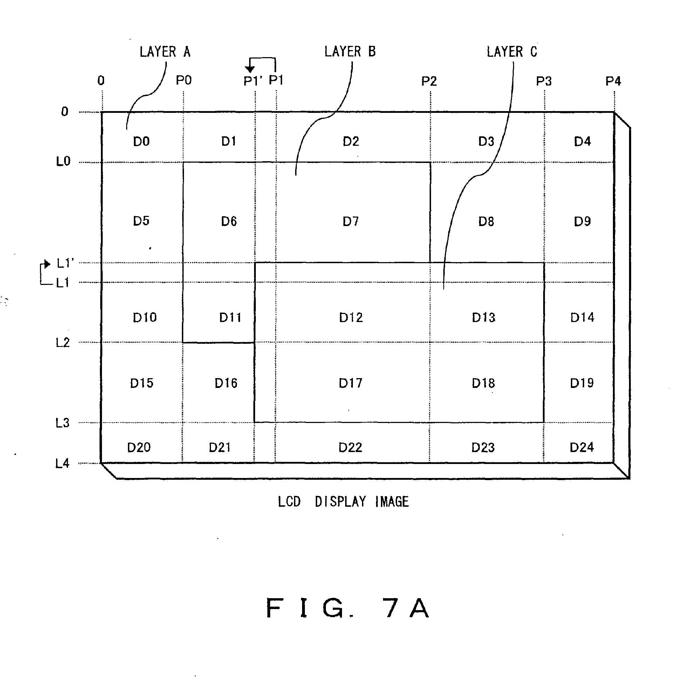

Fig. 7A shows an example of the LCD display image in the case where the display area of the highest-order layer is expanded.

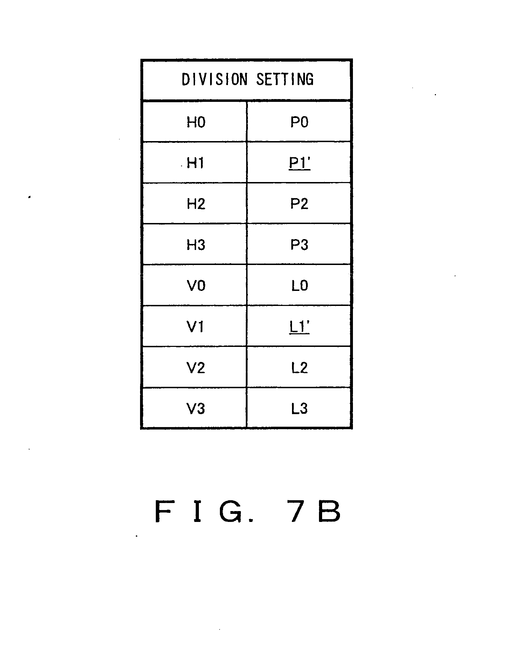

Fig. 7B shows the screen dividing setting corresponding to the LCD display image example in the case where the display area of the highest-order layer is expanded.

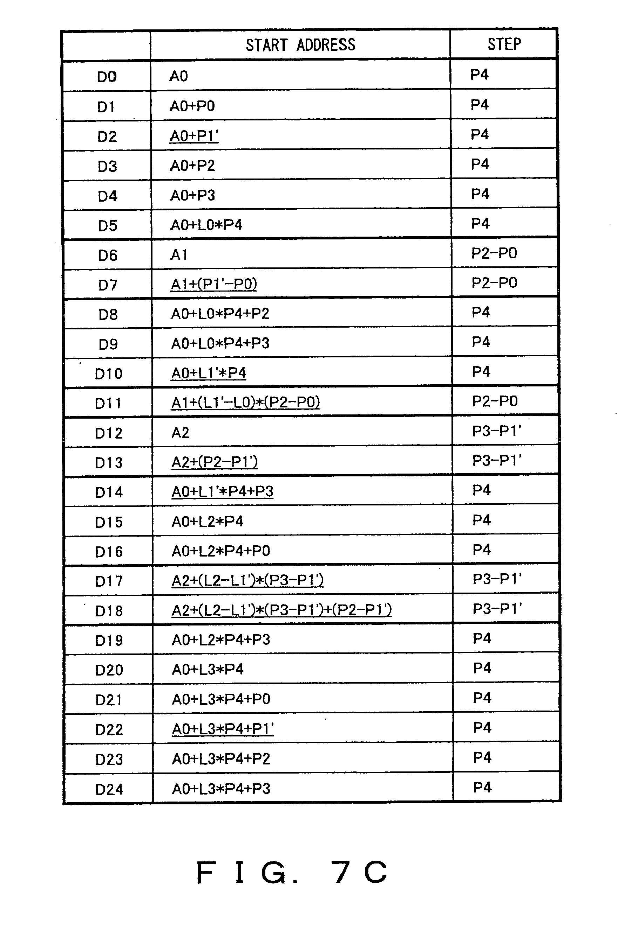

Fig. 7C explains the starting address and step width for each rectangular area in the case where the display area of the highest-order layer is expanded.

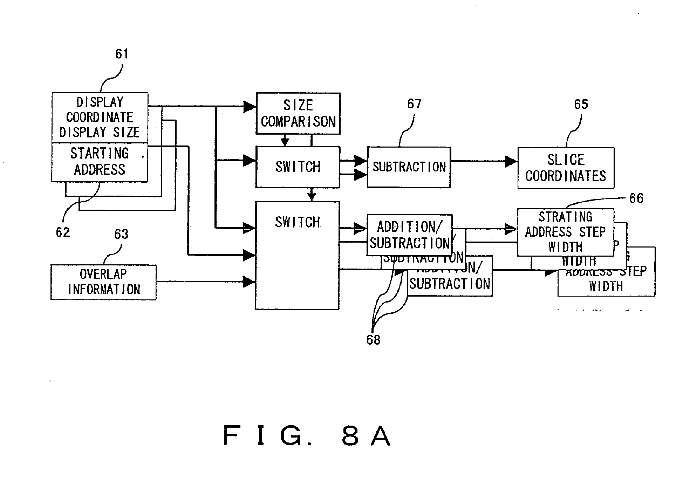

Fig. 8A shows an example of the setting value converting circuit obtaining by combination circuits.

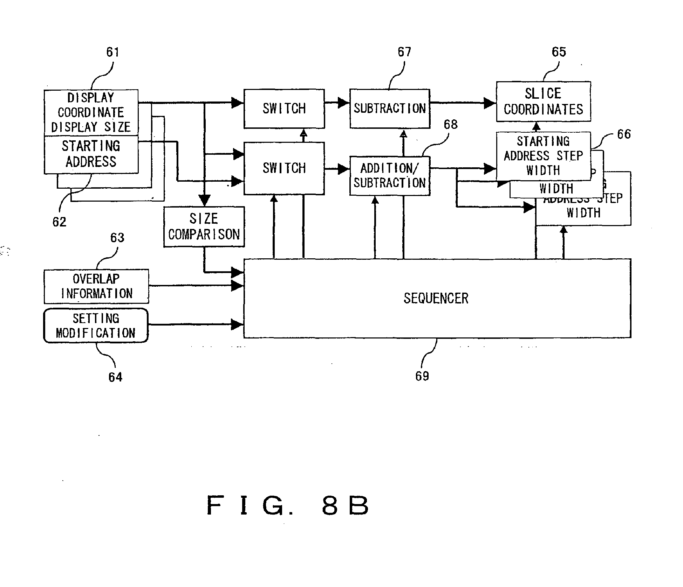

Fig. 8B shows an example of the setting value converting circuit using a sequencer.

### Description of the Preferred Embodiments

The preferred embodiments of the present invention are described in detail below with reference to the drawings. The following description presumes that the overlapped display image and the display data storage in the VRAM are the same as exemplified in Fig. 1. It is also assumed that the display position (origin coordinates and X/Y sizes) of each layer and the display priority of each layer are provided from the outside of display controller as conventionally.

Fig. 3A shows one preferred embodiment of the display controller of the present invention, for displaying a plurality of overlapped layers. Fig. 3B explains its operation. As shown in Fig. 3A, the display controller in the preferred embodiment of the present invention comprises a read control 12 and a data buffer 13, which are shared by each layer. A display control 14 sequentially reads data to be displayed on each of divided parts of screen D0, D1,..., D24, which is described later, by sequentially selecting addresses. The read display data is directly outputted from the data buffer 13 without being processed.

Fig. 4A shows an example of the LCD display image in an embodiment of the present invention. In Fig. 4A, it is set in such a way as to slice a screen by the coordinates of the vertices of overlapped windows, and the sliced rectangular areas (divided parts of a screen) D0, D1,..., D24 are shown. In Fig. 4A, display priority is given in order of layers C, B and A.

. The division setting table 20 shown in Fig. 4B shows the division setting obtained by slicing a screen by the coordinates (X, Y) of the vertices of overlapped windows in accordance with the display image shown in Fig. 4A. In Fig. 4B, coordinate values P0 through P3 corresponding to horizontal division H0 through H3 and coordinate values L0 through L3 corresponding to vertical division V0 through V3 are set in accordance with the display image shown in Fig. 4A.

Fig. 4C shows a starting address setting table 25 for setting the step width of an address on the VRAM when the starting address and line on the VRAM for each of the sliced rectangular areas D0, D1,..., D24 change. The setting values shown in Figs. 4B and 4C are calculated using the display position (origin coordinates and X/Y sizes) of each layer, provided from the outside of the display controller, the display priority of each layer and the starting address on the VRAM of the display data of each layer.

For example, as to the display image shown in Fig. 4A, to layer A, (0, 0), P4 and L4 are provided as origin coordinates, X size and Y size, respectively, to layer B, (P0, L0), P2-P0 and L2-L0 are provided as origin coordinates, X size and Y size, respectively, and to layer C, (P1, L1), P3-P1 and L3-L1 are provided as origin coordinates, X size and Y size, respectively. Using these values and their size relationship, the vertex coordinates of each window can be calculated and thus the setting values shown in Fig. 4B can be obtained.

Furthermore, using the display priority of each layer and the starting address on the VRAM of display data, the setting values shown in Fig. 4C can be calculated. The position and size of each of the rectangular areas D0, D1, ..., D24 can be recognized using the division setting table 20, and to which layer data visibly displayed on each rectangular area can be recognized using the display priority of each layer and the origin coordinates/sizes of each layer. Based on the recognition, the setting values of the starting address setting table 25 shown in Fig. 4C can be calculated.

The display control 14 shown in Fig. 3A performs the operation for calculating these setting values to set them. The display control 14 notifies the read control 12 of the address of data to be read from the VRAM 11, based on this setting value.

Next, the reading of display data from the VRAM 11 based on the value set in Fig. 4C is described with reference to Fig. 5.

Fig. 5 shows VRAM 30 storing the display data of layers A, B and C using A0, A1 and A2 as starting addresses, respectively, a table 31 showing the relationship between the display data of layer A and the above-mentioned rectangular area, a table 32 showing the relationship between the display data of layer B and the above-mentioned rectangular area and a table 33 showing the relationship between the display data of layer C and the above-mentioned rectangular area. The tables 31 through 33 do not exist on memory, and are shown to explain the relationship between the data of each layer stored on the VRAM and the rectangular area.

The reading of display data is started from the start address A0 of the rectangular area D0, which is the leading data of the starting address setting table 25. When the data of the line 0 of D0, that is, the data D0-Line (0) shown at the top of the table 31 is all sequentially read beginning from A0, the start address of D1, which is the subsequent entry of the starting address setting table 25, is referenced and the data of the line 0 of D1 is read from A0+P0. When the data of the line0 of D4 is read, the start address and step width of D0 are reference, and the data of the line 1, which is its subsequent line, is read. Then, every time a line is switched, a start address is obtained by referring to the data of D0, and, for example, an operation to update a start address is repeated. An operation to update a step width can also be repeated, instead of a start address. The switch of the rectangular area in the direction of a line can be detected by providing a counter for counting the number of read pixels or the like and comparing it with the setting value in the horizontal direction of the division setting table 20.

When the data of the line 0, line 1,... and so on of the rectangular areas D0-D4 and the number of read lines reaches L0, the repetition of the above-mentioned operation is terminated. Then, the start address of D5, which is the subsequent entry of D4, is read from the starting address setting table 25, and the display data from the address and the data of the line 0 of D5 is read and displayed. Then, the starting address A1 of layer B is read from the start address of the entry of D6, and the data of the line 0 of D6 and data indicated as D6-Line (0) in the table 32 are read. When the data of all the lines 0 is sequentially read up to D9, the data of the lines 1 of D5, D6,..., D9 is sequentially read. Since a step width is set to P2-P0, the data of the layer B of D6 is read from A1+P2-P0.

The switching in the vertical direction of a rectangular area can be identified by providing a counter for counting the number of read lines and the like and comparing the counted number of read lines with the setting value in the vertical direction of the division setting table 20.

By repeating the above-mentioned operation similarly, only visible data to be actually displayed covering up to the rectangular area D24 can be read from the VRAM.
As clear from the above-mentioned detailed description, by setting as shown in Figs. 4B and 4C, a VRAM address which can be read for each pixel coordinate and be visibly displayed can be uniquely determined. Therefore, as shown in Fig. 3A, each one of the read control 12 and data buffer 13 is specified for a plurality of layers, and the number of data transfer for each pixel to be displayed becomes one.

Next, the modification of the setting value in the case where display image is modified is described.

In this case, as shown in Figs. 6A through 6C, layer B is located in the highest order.

In this case, since the location of data to be displayed in the rectangular area D12 changes from layer C to layer B, as shown in Fig. 6C, the start address and step width settings of the rectangular area D12 is modified from those for layer C to those for layer B. As for the division setting, there is no need to modify it, as shown in Fig. 6B, since no vertex position changes. As understood from the above-mentioned example, when modifying only layer priority, there is no need to modify the division setting, and as to the starting address setting table, it is O.K. if only the setting data of overlapped rectangular area is modified.

In Figs. 7A through 7C, layer C is expanded at the upper left corner. In this case, since a vertex position changes, as shown in Fig. 7B, a division setting value is modified. As for the starting address setting table, as shown in Fig. 7C, it is O.K. only if the division setting value is modified to a modified division setting value.

Therefore, once the value of the starting address table or the like is set, there is no need to redo the setting from the beginning. Even when the display image is modified and any of the origin coordinates and vertical/horizontal sizes of the window of each layer on the screen, and the display priority of each layer is modified, it is O.K. if the setting value of the division table and the setting value of the leading address table are reset only for a rectangular area affected by the modification.

In the above description, the display control 14 converts the previously-proposed layer setting composed of the display position (origin coordinates and X/Y sizes) of each layer, the display priority of each layer and a starting address on the VRAM into the setting of the present invention composed of the slice coordinates (division setting) and setting of the starting address of a divided rectangular area and a step width. However, alternatively, a CPU installed outside a display controller embodying the present invention can perform this process and the division setting table 20 and starting address setting table 25 of the display control 14 can be provided with setting data after the conversion.

A display controller embodying the present invention can also perform the above-mentioned conversion process by software by the CPU installed in the display control 14. Alternatively, it can be performed by hardware by adding hardware to the display control 14 and setting the conversion result in the division setting table 20 and starting address setting table 25.

If the display control 14 performs the above-mentioned conversion process by software, it corresponds to a computer and the setting processes described with reference to Figs. 4B and 4C is performed by a program, that is, a program enables the computer to perform the setting process. If it is processed by a program, the address on the VRAM of the display data of each rectangular area can also be specified based on this setting value.

Next, an example of the setting value converting circuit in the case where the setting values of the division setting table 20 and the starting address setting table 25 set forth in Figs. 4B and 4C, respectively, are calculated by hardware, based on the above-mentioned display position (origin coordinates and X/Y sizes) of each layer, display priority of each layer and starting address on the VRAM which are externally provided is described.

Fig. 8A shows an example of the setting value converting circuit obtaining by combination circuits.

Each of storage units 61 and 62 corresponding to each layer is provided with the display coordinates and sizes on a display screen and a starting address on the VRAM, and a storage unit 63 is provided with overlap information. Then, if a subtraction circuit 67 and an addition/subtraction circuit 68 calculate a value selected by comparing its size and switching it, based on the size relationship between the display coordinates of each layer and overlap information, the slice coordinates, which is the division setting of each layer set forth in Fig. 4B, or the like and the starting address and step width on the VRAM of the rectangular area set forth in Fig. 4C are calculated and are stored in the storage units 65 and 66, respectively. The data stored in the storage units 65 and 66 are set in the division setting table 20 and the leading address setting table 25, respectively.

Fig. 8B shows an example of the setting value converting circuit using a sequencer.

If it is realized only by combination circuits, an adding/subtraction circuit is needed for each layer. Therefore, it is realized a mechanism for sequentially calculating setting values by a sequencer 69. In this case, since a setting value is updated only when there is a setting modification, the sequence is provided with a setting modification trigger 64 and the setting value is calculated when the sequencer is activated by the trigger 64.

As described in detail above, according to an embodiment of the present invention, the occupied ratio of a common data bus by image data transfer can be reduced and the total busy rate of the common data bus can be reduced. Therefore, the installed speed of the bus can be reduced and power consumption can be reduced. If it is used without reducing the installed speed of the bus, it can be used for data transfer for other blocks. Accordingly, it contributes to the improvement of the system function.

Conventionally an independent read circuit is needed for each layer to display a plurality of overlapped layers. However, since in an embodiment of the present invention it needs a single read circuit, a circuit scale can be reduced.

## Claims

1. A display controller which can display a plurality of overlapped layers, comprising:
a VRAM(11) for storing display data of each layer to be displayed in each window on a screen;
a read control unit (12) for specifying an address of display data to be read from the VRAM(11);
a data buffer(13) for storing the display data read from the VRAM(11), with the address specified by the read control unit(12);
a common bus (15) to which the VRAM (11), the read control unit (12) and the data buffer (13) are connected, for transferring the address of the display data and the display data of the address; and
a display control unit (14) for providing the read control unit(12) with the address on the VRAM(11) of the data visibly displayed on a screen after sequentially calculating it based on starting address of display data of each layer in the VRAM(11), origin coordinates and vertical and horizontal sizes of a window of each layer in the screen and display priority of each layer, enabling the read control unit(12) to specify the address of the data read from the VRAM(11) and storing only the data to be visibly displayed on the screen in the data buffer(13).

2. The display controller which can display a plurality of overlapped layers according to claim 1, wherein
said display control unit(14) calculates vertex coordinates of each of the overlapped windows, based on the origin coordinates and vertical/horizontal sizes for each window of each layer on the screen,
comprises a division setting table(20) for setting the calculated vertex coordinate values for slicing/dividing the screen in the vertical and horizontal directions into a plurality of rectangular areas and a starting address setting table(25) for setting , for each of the sliced rectangular areas ,a starting address on said VRAM(11) of the data to be visibly displayed and a step width of an address on the VRAM(11) when a display line on the screen changes , and
sequentially calculates the addresses on said VRAM(11) of the data to be visibly displayed on the screen referring to the division setting table (20) and the starting address setting table(25) and
provides them to said read control unit(12).

3. The display controller which can display a plurality of overlapped layers according to claim 2, wherein
said display control unit(14) calculates the setting value of said starting address setting table (25), based on the starting address of the display data of each layer on said VRAM(11), the display priority of each layer and the setting value of said division setting table(20).

4. The display controller which can display a plurality of overlapped layers according to claim 3, wherein
if any of the origin coordinates and vertical/horizontal sizes of the window of each layer on the screen and the display priority of each layer is modified, the setting value of said division setting table (20) and the setting value of said starting address setting table(25) is reset only for a rectangular area affected by the modification.

5. A method for setting an address specifying value of display data to be displayed on each overlapped window on VRAM(11) for storing the display data of each layer , in order to read data to be displayed on the screen from the VRAM(11), comprising:
calculating vertex coordinates of each of the overlapped windows, based on origin coordinates and vertical/horizontal sizes for each window of each layer on the screen;
setting a division coordinate value for slicing/dividing the screen in the vertical and horizontal directions by the calculated vertex coordinates into a plurality of rectangular areas in a division setting table(20); and
setting, for each of the sliced rectangular areas, a starting address on said VRAM (11) of the data to be visibly displayed and a step width of an address on the VRAM(11) when a display line on the screen changes in a starting address setting table(25).

6. The setting method according to claim 5, wherein the setting value of the starting address setting table(25) is calculated based on the starting address of the display data of each layer on the VRAM(11), the display priority of each layer and the setting value of the division setting table(20).

7. A computer-readable storage medium on which is recorded a program for enabling a computer to set an address specifying value of display data to be displayed on each overlapped window on VRAM(11) for storing the display data of each layer , in order to read data to be displayed on the screen from the VRAM(11),said program comprising:
calculating vertex coordinates of each of the overlapped windows, based on origin coordinates and vertical/horizontal sizes for each window of each layer on the screen;
setting a division coordinate value for slicing/dividing the screen in the vertical and horizontal directions by the calculated vertex coordinates into a plurality of rectangular areas in a division setting table(20); and
setting, for each of the sliced rectangular areas, a starting address on said VRAM(11) of the data to be visibly displayed and a step width of an address on the VRAM(11) when a display line on the screen changes in a starting address setting table(25).

8. The computer-readable storage medium according to claim 7, wherein
the setting value of the starting address setting table(25) is calculated based on the starting address of the display data of each layer on the VRAM(11), the display priority of each layer and the setting value of the division setting table(20).
